# EUROPÄISCHE PATENTANMELDUNG

(11) **EP 0 612 953 A1**
(43) Veröffentlichungstag der Anmeldung: **31.08.1994**
(21) Anmeldenummer: 94810080.5
(22) Anmeldetag: 11.02.1994
(51) Int. Cl.: F16L 47/02, B29C 65/34

(54) **Verbindung rohrförmiger Kunststoffteile**

(30) Priorität: 22.02.1993 CH 543/93
(71) Anmelder: Streng Plastic AG, CH-8155 Niederhasli (CH)
(72) Erfinder: Thalmann, Alfred, CH-8248 Uhwiesen (CH)
(74) Vertreter: Frei, Alexandra Sarah

(57) **Zusammenfassung**

Bei einer Rohrverbindung gemäss Erfindung wird durch Materialwahl die Aussenhülle auf lineare und radiale Festigkeit und kraftschlüssige Verbindung optimiert und durch Materialwahl die Innenpartie des Rohres auf chemische Inertheit und Dichtigkeit der Verbindung optimiert. Die konstruktive Ausgestaltung von Rohr und Verbindungsteil ist auf materialgerechte Verbindungstechnik optimiert. Die Verbundrohre 1 bestehen aus einer starren, verhältnismässig dünnwandigen Rohraussenhülle 3 zur Kraftaufnahme und -übertragung und einem weicheren, ebenfalls verhältnismässig dünnen Innenrohr 4 zur dichten Verbindung und inerten Abdichtung gegen die starre Aussenwandung. Das Verbindungsteil 2 besteht wie das Rohr aus einer starren Verbindungs-Aussenhülle 5 und einem schweissbaren Muffeneinsatz 10 vorzugsweise aus demselben Material wie das Innenrohr 1. Die Schweissenergie wird vorzugsweise elektrisch eingebracht. Zur konstruktiven Ausgestaltung gehört, um eine kraftschlüssige Verbindung einerseits und eine dichte Verbindung andererseits zwischen zwei Rohren herzustellen, dass man an den Rohren an der Verbindungsstelle das Innenrohr um ungefähr die halbe Länge der Schweissmuffe 10 in Form eines freien Rohrstumpfes 9 vorstehen lässt, welcher im zusammengebauten Zustand in den elektroschweissbaren Muffenkörper 10 zu liegen kommt und dass an der Aussenhülle des Verbindungsteils 2 beidseitig eine muffenförmige Partie 6 so angeformt wird, welche nach dem Einführen der Rohre in das Verbindungsteil 2 die korrespondierenden Bereiche der Rohraussenhülle umfasst. Die freien Innenrohrstümpfe 9 werden im Bereich der Heizwicklung 12 am vollen Umfang verschweisst und die Verbindungs-Aussenhülle 5 wird im Bereich der muffenförmigen Partien 6 mit der Rohraussenhülle 3 kraftschlüssig verklebt. Die konsequente Trennung von kraftschlüssiger und abdichtender Verbindung in gleichzeitig, aber unabhängig optimierbarer Vorgehensweise, ohne dass die eine die andere negativ beeinflussen kann, aber von beiden die Vorteile erhalten bleiben, führt zu einem bisher nicht erreichten Resultat.

## Beschreibung

Die Erfindung liegt auf dem Gebiet der Kunststoff-Rohrleitungssysteme und betrifft eine elektrisch schweissbare Rohrverbindung von Hartkunststoff-Rohren, insbesondere Verbundrohre aus glasfaserverstärkten Kunstharz-Werkstoffen gefertigt.

Kunststoffe mit guter Verschweissbarkeit haben in zunehmenden Mass für den Rohrleitungsbau Bedeutung gewonnen und werden überall dort eingesetzt, wo es die Verträglichkeit gegenüber dem zu transportierenden Medium und die mechanische Festigkeit des entsprechenden Werkstoffes zulassen. Neben der Verschweissbarkeit, die auch auf Baustellen eine materialgerechte, dauerhafte Verbindung ermöglicht, spielt auch die meist vorzügliche Korrosionsbeständigkeit solch schweissbarer Thermoplaste eine wesentliche Rolle. Einzig die in der Regel eher niedrige mechanische Festigkeit limitiert in vielen Fällen den breiten Einsatz solcher Rohre auf Rohrleitungsnetze mit mittlerem bis niedrigem Betriebsdruck. Verwendet man bei Rohren trotzdem schweissbare Werkstoffe wie bspw. das weitverbreitete Polyäthylen, so bleibt nichts anderes übrig, als schon bei bescheidenen Betriebsdrücken verhältnismässig grosse Wanddicken einzusetzen. Mit den heute gängigen thermoplastischen Rohrwerkstoffen liegt die praktikable Obergrenze des Betriebsdruckes bei etwa 16 bar. Ausser dem erheblich höheren Materialbedarf und den damit verbundenen Kosten, ist, verglichen mit dünnwandigen Rohren aus mechanisch festeren Werkstoffen, ausserdem die reduzierte lichte Weite, mit anderen Worten, der geringere nutzbare Leitungsquerschnitt, nachteilig und unerwünscht.

In den letzten Jahren haben speziell Hersteller von Polyäthylen-Rohrwerkstoffen (PE-Rohre) grosse Anstrengungen unternommen, um Materialtypen mit höherer mechanischer Festigkeit zu entwickeln und auf den Markt zu bringen. Die auf diese Weise erzielte faktische Erhöhung des Betriebsdruckes ist bisher eher bescheiden ausgefallen. Verglichen, mit den wesentlich höheren Festigkeitswerten von den im Rohrleitungsbau ebenfalls verwendeten glasfaserverstärkten Duroplastrohren (GFK-Rohre), scheint dies nicht der rechte Weg zu sein. Allerdings bietet der alleinige Einsatz von GFK-Rohren auch nicht die gewünschte breite Anwendungsmöglichkeit, denn diese Werkstoffe zeigen oft Limitierungen der Werkstoffeignung bezüglich der in solchen Rohren zu führenden Medien (bspw. Korrosion durch chemischen Angriff, Quellen durch Diffundation etc.) und bezüglich der Verbindungstechnik, die kompliziert, eher teuer und speziell auf der Baustelle in der Handhabung problematisch ist (bspw. dichte Klebeverbindung). Kleben ist, besonders im erdverlegten Rohrleitungsbau, obschon dies die eigentlich werkstoffgerechte Verbindungsweise wäre, mit Handhabungsproblemen und Qualitätsrisiken verbunden, insbesondere deswegen, weil die Dichtigkeit der Verbindung, die stets absoluten Vorrang hat, zur Hauptsache von der handwerklichen Geschicklichkeit des Rohrverlegers bzw. -monteurs abhängt.

So hat man Probleme und Einschränkungen in Kauf zu nehmen, wenn man GFK-Rohre einsetzt und man hat Einschränkungen in Kauf zu nehmen, wenn man Thermoplast-Rohre, bspw. PE-Rohre, einsetzt. Beide Rohrleitungssysteme haben ihren eigenen Stand der Technik erreicht und sind in ihrem, wie gesagt beschränkten Einsatzgebiet, sicher und zuverlässig verwendbar. PE-Rohre sind durch die recht einfache und heute normierte Elektroschweissung, der wirklich werkstoffgerechten Verbindungsweise, problemlos dicht und dauerhaft zu verbinden, wobei sich PE-Rohrwerkstoffe ausserdem zu sehr vielen durchleitbaren Fluiden neutral verhalten. Bei höheren Betriebsdrücken muss man allerdings passen. GFK-Rohrsysteme sind bezüglich der Herstellung dichter Verbindungen viel heikler und/oder sind dann mit einem erheblichen Risiko der Langzeittauglichkeit von solchen Rohr-Verbindungsstellen behaftet. Rohrsysteme aus GFK-Werkstoffen halten allerdings wesentlich höhere Betriebsdrücke aus. Dagegen büsst man beim Spektrum der durchleitbaren Fluiden einiges an Möglichkeiten ein.

Es ist somit Ziel der Erfindung, die diskutierten Vorteile so in die Gesamtfunktion zu integrieren, dass sie gleichzeitig nutzbar werden und die Nachteile derart von der Gesamtfunktion auszugrenzen, dass sie funktionsmässig nicht mitwirken können.

Dieses Ziel wird durch die in den Patentansprüchen angegegebene Erfindung erreicht. Es ist im wesentlichen eine funktionale Kombination solcher Materialien derart, dass bei einem GFK-Rohranteil bspw. die Dichtigkeit der Verbindung untergeordnet ist, also keine speziellen handwerklichen Fähigkeiten auf der Baustelle erforderlich sind, dafür aber die Eigenschaften der Festigkeit ganz in den Vordergrund kommt und dass bei einem PE-Rohranteil die Festigkeit keine wesentliche Rolle spielt, dafür aber die leichter herzustellende Dichtigkeit und die weitgehend chemische Affinität bestens genutzt wird. Dies unter gleichzeitiger Nutzung bei Herstellung und Betrieb von Rohrleitungssystemen.

Konstruktiv umgesetzt führt das zu einem thermoplastischen Innenrohr und einem duroplastischen Aussenrohr, was auch auf die Verbindungsteile übertragen wird, wobei einfach handhabbare und langzeittaugliche Verbindungstechniken dieser Kombination massgebend sind. Diese Kombination wird durch eine besondere konstruktive Gestaltung herbeigeführt. Grob gesagt, rüstet man ein duroplastisches Aussenrohr mit einem thermoplastischen Innenrohr als Verbund-Rohr aus und die Verbindungsteile für solch ein Verbundrohr sind als elektroschweissbare Verbindungselemente ausgebildet.

Die Rohrverbindungsteile sollen so gestaltet sein, dass einerseits das thermoplastische Innenrohr (liner) dicht und langzeittauglich verbunden wird und andererseits eine längs- und radialkraftschlüssige Verbindung der im Schweissbereich des Innenrohrs unterbrochenen, mechanisch beanspruchbaren Aussenrohrschicht der zu verbindenden, rohrförmigen Enden oder zu einer Steckmuffe ausgeformten Partie, zu einer durchgehenden, mechanisch belastbaren Einheit verbunden werden kann. Die Innenlage kann auch mehrschichtig sein, also ein mehrschichtiges "Innenrohr" aufweisen. Auf diese Weise hat man die Funktion der Dichtigkeit auf das thermoplastische Material und die Funktion der Festigkeit auf das duroplastische Material übertragen; wobei keines von beiden an den gesuchten Vorteilen des andern Werkstoffes teilhaben muss (liner muss keine hohe Festigkeit aufweisen, Aussenrohr muss nicht dicht sein). Die optimale und damit wesentliche werkstoffgerechte Verbindung beider Materialien wird beibehalten; der thermoplastische Werkstoff wird geschweisst, der duroplastische Werkstoff wird geklebt. Die Ausführung der Schweissung des thermoplastischen Innenrohrs ist anerkannt einfach in der Handhabung; die Verbindbarkeit der mechanisch tragfähigen GFK-Aussenschicht kann durch konstruktive Massnahmen baustellentauglich gestaltet werden.

Anhand der nachfolgend aufgeführten Figuren werden nun Ausführungsformen der Erfindung im Detail diskutiert.
- Figur 1: zeigt eine erste konstruktive Ausgestaltung einer Rohr-Verbindung gemäss Erfindung vor dem Zusammensetzen und
- Figur 2: zeigt die Rohr-Verbindung von Figur 1 nach dem Zusammensetzen.
- Figur 3: zeigt eine zweite konstruktive Ausgestaltung einer Rohrverbindung gemäss Erfindung vor dem Zusammensetzen und
- Figur 4: zeigt die Rohrverbindung von Figur 3 nach dem Zusammensetzen des schweissbaren Innenteils.
- Figur 5: zeigt schematisch die gemäss den Figuren 3 und 4 in einem vorbereiteten Arbeitsschritt zusammengesesetzte und dichte Rohrleitung, auf die nun der entsprechende Aussenteil der Rohrmuffe für eine Verbindung gemäss Erfindung in Form von offenen GFK-Halbschalen zur Herstellung des Kraftschlusses gesetzt wird und
- Figur 6: zeigt die Seitensicht der in Figur 5 dargestellten beiden Halbschalen vor dem Zusammensetzen im Schnitt gesehen.
- Figur 7: zeigt die Muffe gemäss den Figuren 5 und 6 nach dem kraftschlüssigen Zusammenfügen im Teilschnitt gesehen und
- Figur 8: zeigt die Muffe gemäss Figur 7 nach dem kraftschlüssigen Zusammensetzen von der Seite gesehen.

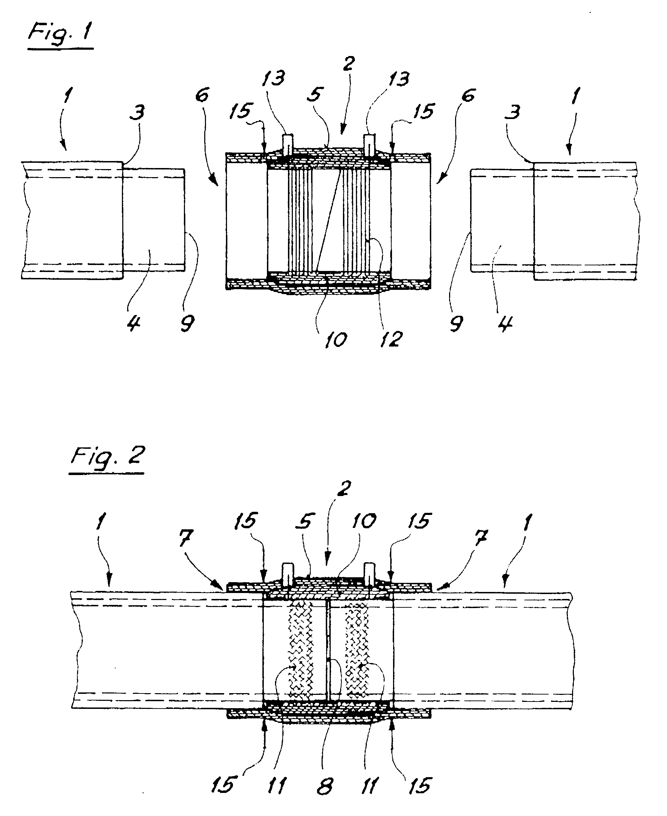

Figur 1 zeigt in schematischer Darstellung eine bevorzugte Ausführungsform der Erfindung, Teile wie Rohre und Muffen, so wie sie vor dem Verbindungsvorgang vorliegen. Man erkennt zwei Verbund-Rohre 1, die durch einen Verbindungsteil 2 verbunden werden sollen. Die Materialwahl für die Aussenhülle bzw. Aussenrohr ist auf lineare und radiale Festigkeit und kraftschlüssige Verbindung optimiert, bspw. glasfaserverstärkter Kunststoff (GFK), die Materialwahl der Einlage ist auf chemische Inertheit und Dichtigkeit der Verbindung optimiert, bspw. Polyäthylen (PE). Die konstruktive Ausgestaltung von Rohr und Muffe ist auf materialgerechte Verbindung optimiert, bspw. GFK/Klebverbindung, PE/Schweissverbindung. Die Verbund-Rohre bestehen aus einem starren, verhältnismässig dünnwandigen Aussenrohr 3 zur Kraftaufnahme und -übertragung und einem weicheren, ebenfalls verhältnismässig dünnen Innenrohr 4 zur dichten Verbindung und inerten Abdichtung gegen die starre Aussenwandung. Das Verbindungsteil 2 besteht wie das Rohr aus einer mechanisch tragfähigen Verbindungs-Aussenhülle 5, eine Kraftbrücke über die getrennten Rohrteile bildend, und einem schweissbaren Muffenkörper 10 als Dichtelement zwischen den getrennten Innenrohrteilen, welcher vorzugsweise aus demselben Material wie das Innenrohr 4 oder aus einem mit diesem verschweissbaren Material besteht. Die Schweissenergie wird vorzugsweise elektrisch eingebracht. Dazu weist das Verbindungsteil 2 eine in den Muffenkörper 10 integrierte Heizwicklung 12 und elektrische Anschlüsse 13 auf. Zur konstruktiven Ausgestaltung gehört, um eine kraftschlüssige Verbindung einerseits und eine dichte Verbindung andererseits zwischen zwei Rohren herzustellen, dass man an den Rohren an der Verbindungsstelle das Innenrohr um ungefähr die halbe Länge des Muffenkörpers in Form eines freien Rohrstumpfes 9 vorstehen lässt, welcher im zusammengebauten Zustand in den elektroschweissbaren Muffenkörper 10 zu liegen kommt und dass an der Aussenhülle des Verbindungsteils 2 beidseitig eine muffenförmige Partie 6 (wie eine Steckmuffe) so angeformt wird, dass nach dem Einführen der Rohre 1 in das Verbindungsteil 2, die korrespondierenden Bereiche der Rohraussenhüllen 3 umfasst werden. Schliesslich sind am Verbindungsteil 2 an geeigneten Orten Einfüllstellen 15 zum Einbringen des zu verwendenden Klebstoff vorgesehen, hier an einer der möglichen Stellen angezeigt. Dies sind bspw. tüllenförmige Oeffnungen, durch die der Klebstoff eingepresst werden kann, damit er sich zwischen der Innenwandung der muffenförmigen Partie 6 und der Aussenfläche des Rohres 1 verteilen kann, wobei diese Verbindung, wie schon erwähnt, nur kraftschlüssig aber bezüglich des zu transportierenden Mediums nicht dicht sein muss. Dies ist ein grosser Vorteil gegenüber Rohrverbindungen, die durch Kleben vereinigt und dicht gemacht werden müssen.

Die vorstehenden Innenrohrstümpfe 9 werden beim Zusammenfügen in den Muffenkörper 10 eingeschoben und können in den Bereichen der Heizwicklung 12 vollumfänglich miteinander dicht verschweisst werden, was durch die Schweissstellen 11 dargestellt ist. Die werkstoffgerechten Verbindungen, bzw. das Herstellen solcher Verbindungen, hier Klebetechnik und Schweisstechnik, sind gesicherte Erfahrung, man geht bei der hier vorgeschlagenen kombinierten Verbindungstechnik keine unkalkulierbaren Risiken ein. Die konsequente Trennung von kraftschlüssiger und dichter Verbindung in getrennt optimierbarer Vorgehensweise und gleichzeitiger Anwendung, ohne dass die eine die andere negativ beeinflussen kann, aber von beiden die Vorteile erhalten bleiben, führt zu einem bisher nicht erreichten Resultat.

Figur 2 zeigt die Rohrverbindung von Figur 1 nach dem Verbindungsvorgang. Man erkennt wieder die beiden, nun vereinigten Rohre 1 und den mit den Innenrohren dicht verschweissten Muffenkörper 10. Die kraftschlüssige Verbindung 7 von einem Rohr zum anderen ist über die Klebestelle der muffenförmigen Partien 6 und die mechanisch tragende Verbindungsaussenhülle 5 gewährleistet. Die dichte Verbindung der Innenrohre 4 ist durch die Schweissstellen 11 gewährleistet, wobei es strömungstechnisch vorteilhaft ist, wenn die Rohrstumpfe 9 in einem Rohrstoss 8 zusammengefügt sind.

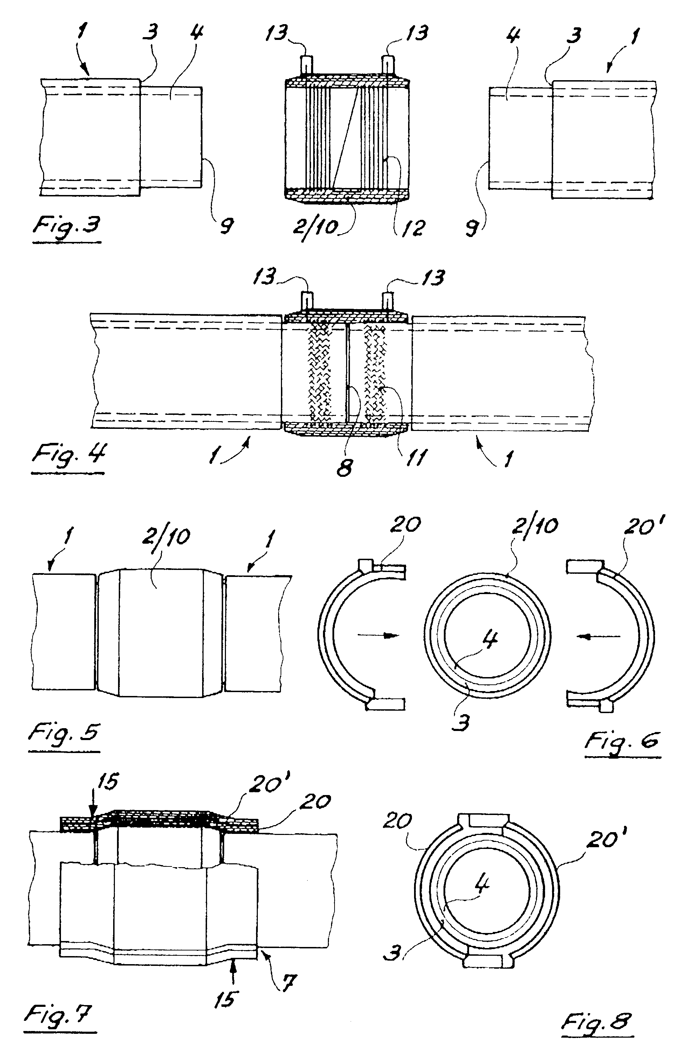

Eine Variation zeigen die Figuren 3 bis 8. An Stelle eines als eine Einheit hergestellten Verbindundsteils kann es wünschbar sein, die Rohrverbindung in Form eines getrennten als Muffenkörper ausgestalteten Innenteils und aufsetzbaren, schalenförmigen Aussenteilen herzustellen. Die angezielte Rohrverbindung wird dann in zwei Arbeitsschritten durchgeführt. Den ersten Arbeitsschritt zeigen die Figuren 3 und 4; den zweiten Arbeitsschritt zeigen die Figuren 5 und 6, die Figuren 7 und 8 zeigen die fertige Rohrverbindung in seitlicher Ansicht und im Schnitt.

Die beiden zu verbindenden Rohre 1 mit den vorstehenden Rohrstümpfen 9 werden in einen mit einer Heizwicklung 12 und nach Gebrauch entfernbaren elektrischen Anschlüssen versehenen Muffenkörper 2/10 eingeschoben, Stumpf auf Stumpf gestossen (siehe Stelle 8 gemäss Figur 4) und mittels Elektroschweissung dicht und langzeittauglich verschweisst. Auf diese Weise entsteht im ersten Arbeitsschritt eine dichte aber mechanisch nur bedingt belastbare Innenrohrverbindung gemäss Figur 5. Der gewünschte äussere Kraftschluss im Bereich der Verbindungsstelle wird durch Aufsetzen von zwei schalenförmigen Halbteilen, die Verstärkungsschalen 20,20' als Kraftübertragungsbrücke gemäss Figur 6 herbeigeführt. Die beiden Verstärkungsschalen, die eine entsprechende Passform aufweisen, werden gegenseitig miteinander, als auch in den muffenförmigen Partien 6 und, wie schon oben diskutiert, mit dem Aussenrohr 3 der Verbund-Rohre 1 verklebt. Dabei soll man darauf achten, dass allfällige, zwischen der Innenrohrverbindung und der Passform der Aussenhülle entstehende Hohlräume durch Klebe- und Füllmasse ausgefüllt werden. Die fertige Rohrverbindung, wie sie in den Figuren 7 und 8 gezeigt ist, entspricht bezüglich Eigenschaften einer solchen, wie sie im Zusammenhang mit den Figuren 1 und 2 diskutiert wurde.

## Patentansprüche

1. Rohrverbindung, bestehend aus zu verbindenden/verbundenen Rohren und einer Verbindungsmuffe, **dadurch gekennzeichnet,** dass die zu verbindenden Rohre (1) mindestens zweischichtig (3,4) ausgeführt sind, dass die Verbindungsmuffe (2) einen rohrförmigen Innenkörper (10) zum Verbinden einer Innenlage (4) der Rohre (1) und eine den Innenkörper umfassende Aussenhülle (5) zum Verbinden der Aussenlage (3) der Rohre (1) aufweist, dass Mittel (12,13) zum Erwärmen des Innenkörpers vorgesehen sind, womit eine Schweissverbindung der Innenlage (4) der Rohre ermöglicht wird, und dass Mittel (6) an der Verbindungsmuffe (2) vorgesehen sind, mit denen zusammen mit den Rohraussenlagen eine kraftschlüssige Verbindung (7) herstellbar ist.

2. Rohrverbindung gemäss Anspruch 1, **dadurch gekennzeichnet,** dass Aussenlagen (3) der Rohre (1) und Aussenhülle (5) der Verbindungsmuffe (2) aus einem starren Werkstoff und mindestens eine Innenlage (4) der Rohre und der Innenkörper (10) der Verbindungsmuffe aus einem schweissbaren Kunststoffmaterial bestehen.

3. Rohrverbindung nach den Ansprüchen 1 und 2, **dadurch gekennzeichnet,** dass Aussenlagen (3) und Aussenhüllen (5) aus glasfaserverstärktem Kunststoff und Innenlagen (4) und Innenkörper (10) aus Polyäthylen bestehen und dass die Mittel (12,13) zum Aufwärmen des Innenkörpers elektrische Mittel sind.

4. Rohrverbindung nach Anspruch 3, **dadurch gekennzeichnet,** dass bei einer fertigen Rohrverbindung die Aussenlagen (3) der Rohre (1) mit der Aussenhülle (5) der Verbindungsmuffe (2) kraftschlüssig verklebt sind und dass die Innenlagen (4) der Rohre über die und mit dem Innenkörper (10) der Verbindungsmuffe verschweisst sind.

5. Rohrverbindung gemäss einem der Ansprüche 1 bis 4, **dadurch gekennzeichnet,** dass die Aussenhülle (5,20) der Verbindungsmuffe (2) als verbindbare Teilschalen (20,20') ausgeführt sind.
